# EUROPÄISCHE PATENTSCHRIFT

(11) **EP 3 329 142 B1**
(45) Veröffentlichungstag und Bekanntmachung des Hinweises auf die Patenterteilung: **14.08.2019**
(21) Anmeldenummer: 16733077.8
(22) Anmeldetag: 29.06.2016
(51) Int. Cl.: F16F 9/06, F16F 9/32

(54) **HYDRAULISCHER EINROHR-TELESKOP-SCHWINGUNGSDÄMPFER**
HYDRAULIC SINGLE-TUBE TELESCOPIC VIBRATION DAMPER
AMORTISSEUR DE VIBRATIONS TÉLESCOPIQUE MONOTUBE HYDRAULIQUE

(30) Priorität: 31.07.2015 DE 102015214604
(43) Veröffentlichungstag der Anmeldung: 06.06.2018
(73) Patentinhaber: Bayerische Motoren Werke Aktiengesellschaft, 80809 München (DE)
(72) Erfinder: SCHMIDT, Roland, 82131 Stockdorf (DE)
(86) Internationale Anmeldenummer: PCT/EP2016/065106
(87) Internationale Veröffentlichungsnummer: WO 2017/021064

(56) Entgegenhaltungen:
- EP-A2- 2 270 355
- WO-A1-02/095260
- DE-A1-102005 001 338

## Beschreibung

Die Erfindung betrifft einen hydraulischen Einrohr-Teleskop-Schwingungsdämpfer nach dem Oberbegriff des Anspruchs 1, insbesondere für einen Einsatz im Fahrwerk eines Fahrzeugs zur Bedämpfung von Vertikalschwingungen des Fahrzeug-Aufbaus gegenüber den Fahrzeuug-Rädern. Neben der EP 2 249 057 A1 wird zum Stand der Technik insbesondere auf die DE 10 56 946 B verwiesen.

Dem Fachmann bekannt sind die sog. Einrohr-Dämpfer, die bspw. als Schwingungsdämpfer in Fahrwerken von Kraftfahrzeugen Verwendung finden. Für den bekanntlich erforderlichen Volumenausgleich für die nur eine der Dämpfer-Arbeitskammern durchdringende Kolbenstange ist üblicherweise innerhalb des Dämpferrohrs in dessen Bodenbereich eine Gasdrucckammer (als Gasvolumen gemäß Oberbegriff des Anspruchs 1) vorgesehen, die mittels eines zumindest geringfügig verlagerbaren Trennkolbens von der benachbarten Arbeitskammer getrennt ist. Bekannt sind aber auch Dämpfer mit ausgelagertem Gasdruckspeicher, d.h. bei denen das vorliegend sog. Gasvolumen außerhalb oder abseits des Dämpferrohres vorgesehen ist. Ein solcher Dämpfer ist z.B. aus der WO02/095260 bekannt.

Damit das Gasvolumen bei einem herkömmlichen Einrohr-Schwingungsdämpfer die ihm zugteilte Aufgabe sicher erfüllen kann, muss der (vorbefüllte) Gasdruck im Gasvolumen höher sein als der maximale in der (dem Gasvolumen) zugeordneten Arbeitskammer des Dämpfers - im weiteren wird auch dieser kürzere Begriff für einen hydraulischen Einrohr-Teleskop-Schwingungsdämpfer verwendet - auftretende Hydraulikdruck. Wäre dies nämlich nicht der Fall, so könnte der üblicherweise vorgesehene Trennkolben durch einen entsprechend hohen Hydraulikdruck der Arbeitskammer gegen den Gasdruck verschoben werden und damit das Volumen des Gasvolumens signifikant reduzieren, womit der Dämpfer aber nicht mehr als Dämpfer, d.h. bewegungsdämpfend wirken würde, sondern wie ein (zusätzliches) Federelement (in der Fzg.-Radaufhängung) wirken würde. Um letzteres zu vermeiden, wird jedenfalls für die Anwendung in Personenkraftwagen ein Gasdruck in der Größenordnung von 20 bar bis 30 bar gewählt. Durch diesen relativ hohen Druck wird jedoch die Kolbenstangen-Dichtung des Dämpfers stark vorgespannt, was hohe Reibung und hohe Losbrechkräfte zur Folge hat. Aus diesem Grund wird bei höheren Komfortansprüchen bekanntlich ein Zweirohr-Dämpfer verwendet, bei welchem aufgrund eines zwischengeschalteten Ventils erheblich geringere Druckwerte (nämlich in der Größenordnung von 1 bar bis 8 bar) im Gasvolumen genügen, jedoch haben solche Zweirohr-Dämpfer andere Nachteile wie Gewicht, Baugröße und reduzierte Wärmeabfuhr.

Eine Maßnahme, mit Hilfe derer bei einem Einrohr-Schwingungsdämpfer an einem Einrohr-Dämpfer ein geringerer Gasdruck benötigt wird, ist in der eingangs zweitgenannten Schrift gezeigt und sieht vor, dass das Gasvolumen in Abhängigkeit von der Bewegungsrichtung des Kolbens über einen Hydraulikanal und unter Zwischenschaltung eines Ventils mit derjenigen Arbeitskammer verbunden wird oder verbunden ist, in welche Hydraulikmedium aufgrund der Kolbenbewegung aus der anderen Arbeitskammer einströmt und/oder in welcher verglichen mit der anderen Arbeitskammer der geringere Hydraulikdruck herrscht.

Mit der vorliegenden Erfindung soll nun eine funktional-bauliche Verbesserung dieses bekannten Standes der Technik aufgezeigt werden, das es für die erwünschten Dämpfungswirkung nachteilig ist, wenn, wie in der DE 10 56 946 B gezeigt, der besagte mit dem Gasvolumen in Wirkverbindung stehende Hydraulikkanal mit den eigentlichen Dämpferkanälen, in welchen die die Schwingungs- oder Bewegungsdämpfung verursachende Dämpferventile vorgesehen sind, in direkter Verbindung steht (= Aufgabe der vorliegenden Erfindung).

Die Lösung dieser Aufgabe ergibt sich mit den Merkmalen des Anspruchs 1'; vorteilhafte Aus- und Weiterbildungen sind Inhalt der Unteransprüche.

Bekanntlich weist der Zylinder bzw. das Zylinderrohr eines Dämpfers beim Verschieben des Dämpfer-Kolbens eine Arbeitskammer mit höherem Hydraulikdruck und eine Arbeitskammer mit niedrigem Hydraulikdruck auf. Die Druckverhältnisse in den Arbeitskammern ändern sich dabei abhängig von der Bewegungsrichtung des Dämpfer-Kolbens, sodass bei einem Schwingungsdämpfer im Fahrwerk eines Kraftfahrzeugs in der sog. Druckstufe (d.h. wenn der Fahrzeugaufbau zur Fahrbahn hin einfedert) in der unterhalb des im wesentlichen in Vertikalrichtung verlagerbaren Dämpfer-Kolbens liegenden Hydraulikkammer ein hoher Druck herrscht, während sich dort in der sog. Zugstufe (d.h. wenn der Fahrzeugaufbau nach oben gerichtet ausfedert) ein niedrigerer Druck einstellt.

Wenn nun das Gasvolumen bzw. dessen pressende Einwirkung auf eine der Dämpfer-Arbeitskammern bzw. auf das in diesen befindliche Hydraulikmedium durch eine geeignete Schaltung immer auf diejenige Seite des Dämpfer-Kolbens bzw. an diejenige Arbeitskammer angelegt wird, auf der bzw. in welcher der niedrigere (geringere) Hydraulikdruck herrscht, so kann der Gasdruck im Gasvolumen sehr niedrig gehalten werden, ohne dass die Gefahr besteht, dass der Dämpfer wie ein Federelement wirkt. Es ist dann nämlich diejenige Arbeitskammer des Dämpfers, an der der Dämpfer-Kolben während seiner Verlagerung abgestützt ist, mit Ausnahme der üblichen Dämpferventile, durch welche das Hydraulikmedium in üblicher Weise von der einen Arbeitskammer in die andere Arbeitskammer überströmt, quasi geschlossen. Diejenige Arbeitskammer, an der der Dämpferkolben abgestützt ist, ist bekanntlich diejenige Arbeitskammer, in welcher der höhere Hydraulikdruck vorliegt und genau diese Arbeitskammer ist erfindungsgemäß nicht mit dem Gasvolumen verbunden, so dass der höhere aus der Verlagerung des Dämpfer-Kolbens resultierende hydraulische Dämpfer-Druck praktisch (d.h. abgesehen von den Dämpferventilen) gegen einen "geschlossenen" Raum drückt und nicht mehr gegen den Gasdruck im Gasvolumen.

Letzteres wirkt hingegen erfindungsgemäß durch geeignetes und definiertes Umschalten stets auf diejenige Arbeitskammer ein, in welcher der geringere Hydraulikdruck herrscht. Dort verhindert der Gasdruck des Gasvolumens zum einen ein "Abreißen" der Flüssigkeitssäule und stellt in dem Fall, dass sich diejenige Arbeitskammer, durch welche die Kolbenstange des Dämpfer-kolbens hindurchgeführt ist, vergrößert, insbesondere sicher, dass die Kolbenstangen-Dichtung geeignet mit Druck beaufschlagt wird, so dass sie ihre Abdichtfunktion auch bestmöglich erfüllen kann. Hierfür ist aber ein relativ geringer Gasdruck ausreichend, der dem eines mit Luft im Gasvolumen befüllten Zweirohr-Dämpfers - dieser Druck liegt in der Größenordnung von 1 bar - 8 bar - entspricht.

Vorstehendes gilt aber nur dann mit ausreichender Sicherheit bzw. stellt sich nur dann im tatsächlichen Betrieb eines Fahrzeugs ein, wenn ein Hydraulickanal, welcher die Wirk-Verbindung zwischen dem Gasvolumen und der jeweiligen Arbeitskammer herstellt, nicht mit denjenigen Dämpferkanälen, in oder an denen die die gewünschte Dämpfungswirkung erzeugenden üblichen Dämpferventile vorgesehen sind, direkt hydraulisch zusammenhängt, weil sich andernfalls undefinierte Strömungsverhältnisse einstellen könnten. Um letzteres zu vermeiden, wird weiterhin vorgeschlagen, das Ventil im besagten Hydraulikkanal, welches das Gasvolumen entweder mit der einen oder mit der anderen Arbeitskammer wirkverbindet, als sog. Schwarz-Weiß-Ventil, d.h. als ein Umschaltventil auszubilden, welches im bestimmungsgemäßen Betrieb nur zwei definierte Schaltposition einnehmen kann, nämlich dabei entweder eine Wirkverbindung zur ersten Arbeitskammer herstellen kann oder eine Wirkverbindung zur zweiten Arbeitskammer herstellen kann. Im Sinne eines optimierten Bauaufwands ist in einem besagten Hydraulikkanal lediglich ein solches Umschalt-Ventil vorgesehen. Es kann ein erfindungsgemäß zugeschaltetes Gasvolumen außerhalb oder abseits des den Kolben führenden Zylinders vorgesehen sein; besonders vorteilhaft ist es jedoch, das Gasvolumen innerhalb des bewegten Kolbens und oder in dessen Kolbenstange vorzusehen, da damit erstens kein weiterer Bauraum benötigt wird und zweitens keine aufwändigen Leitungen zwischen den Arbeitskammern und dem Gasvolumen vorgehalten werden müssen. Im Sinne einer kompakten Bauweise kann dann auch das besagte Ventil, welches die kolbenbewegungsabhängige Umschaltung des Gasvolumens zwischen den beiden Arbeitskammern ausführt, im Kolben (= Dämpfer-Kolben) selbst vorgesehen sein. Eine besonders vorteilhafte Ausführungsform der vorliegenden Erfindung sieht das Ventil in einem Verbindungskanal zwischen den beiden Arbeitskammern angeordnet vor, von welchem Verbindungskanal ein Stichkanal zum Gasvolumen abzweigt und wobei das Ventil ausgelöst durch den Hydraulikdruck in den Arbeitskammern und/oder durch ein Überströmen von Hydraulikmedium zwischen den Arbeitskammern nur eine der beiden Arbeitskammern mit dem zum Stichkanal führenden Abschnitt des Verbindungskanal verbindet. Der genannte Verbindungskanal bildet dabei zusammen mit dem weiterhin genannten Stichkanal den weiter oben so genannten Hydraulikkanal, der eine Wirkverbindung zwischen dem Gasvolumen und bestimmt durch das Umschaltventil einer der Arbeitskammern des Dämpfers herstellt.

Es wurde bereits erwähnt, dass auch die Kolbenstange, genauer ein in dieser vorgesehener Hohlraum ein Bestandteil des Gasvolumens sein kann. In diesem Zusammenhang ist es besonders vorteilhaft, wenn das Gasvolumen mittels eines in der Kolbenstange verlaufenden Kanals mit der Umgebung verbindbar ist, da dann das Gasvolumen durch diesen Kanal hindurch befüllt werden, d.h. beim Fertigungsprozess eines erfindungsgemäßen Dämpfers mit Gasdruck beaufschlagt werden kann. An einer erfindungsgemäßen hydraulischen Zylinder-Kolbeneinheit kann das Gasvolumen entweder direkt, d.h. ohne Zwischenschaltung einer verlagerbaren Trennwand oder dgl. auf das Hydraulikmedium der jeweiligen Arbeitskammer einwirken - so wie dies bei vielen Zweirohrdämpfern von Kraftfahrzeugen der Fall ist - oder es kann das Gasvolumen zwei voneinander getrennte Räume aufweisen, nämlich einen Gasraum, welcher nur eine unter Vordruck stehende Gasfüllung enthält, und weiterhin einen Hydraulikraum, auf welchen der Gasraum mit seinem Vordruck pressend einwirkt. Der soeben genannte Hydraulikraum ist dabei ein Bestandteil eines im Oberbegriff des unabhängigen Patentanspruchs genannten Hydraulikkanals, über den das Gasvolumen auf eine der Arbeitskammern pressend einwirkt. Eine Trennung oder Trennwand zwischen den beiden vorstehend genannten Räumen, d.h. zwischen dem Gasraum und dem Hydraulikraum des Gasvolumens muss selbstverständlich in irgendeiner Art flexibel oder verlagerbar sein, damit das Gasvolumen im gewünschten Sinne wirksam werden kann. Hierfür kann die Trennung bspw. durch einen Trennkolben oder eine Membran oder einen elastischen Balg gebildet sein.

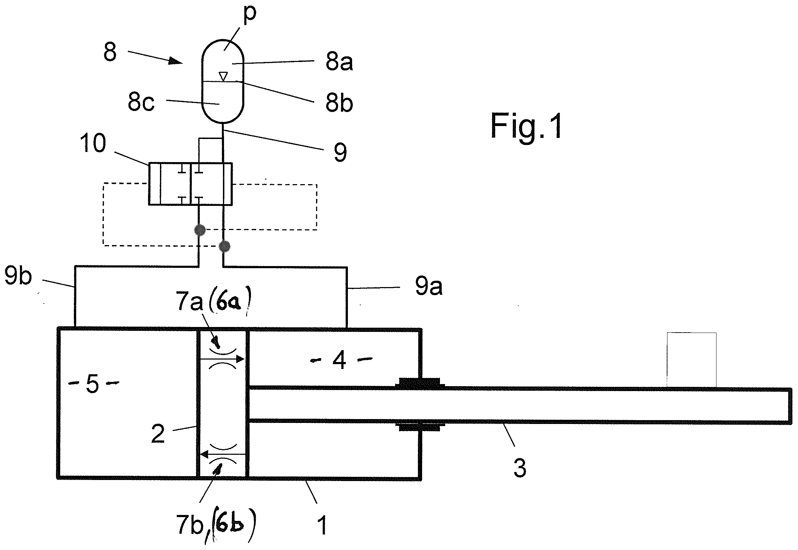

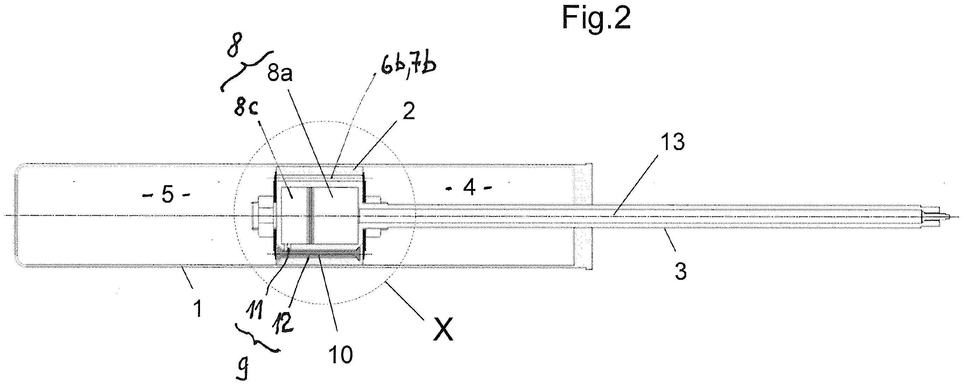

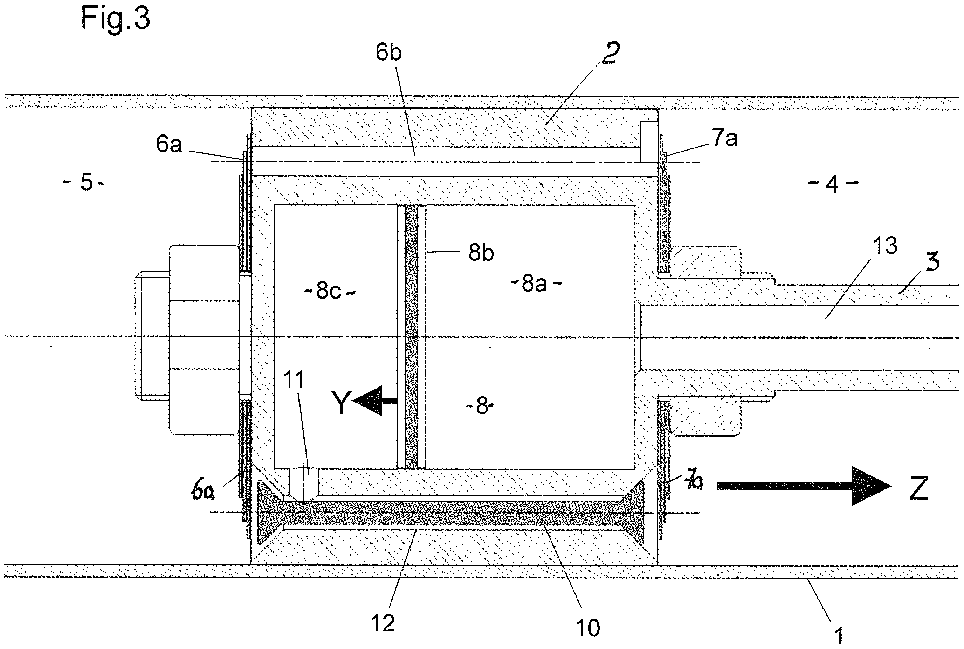

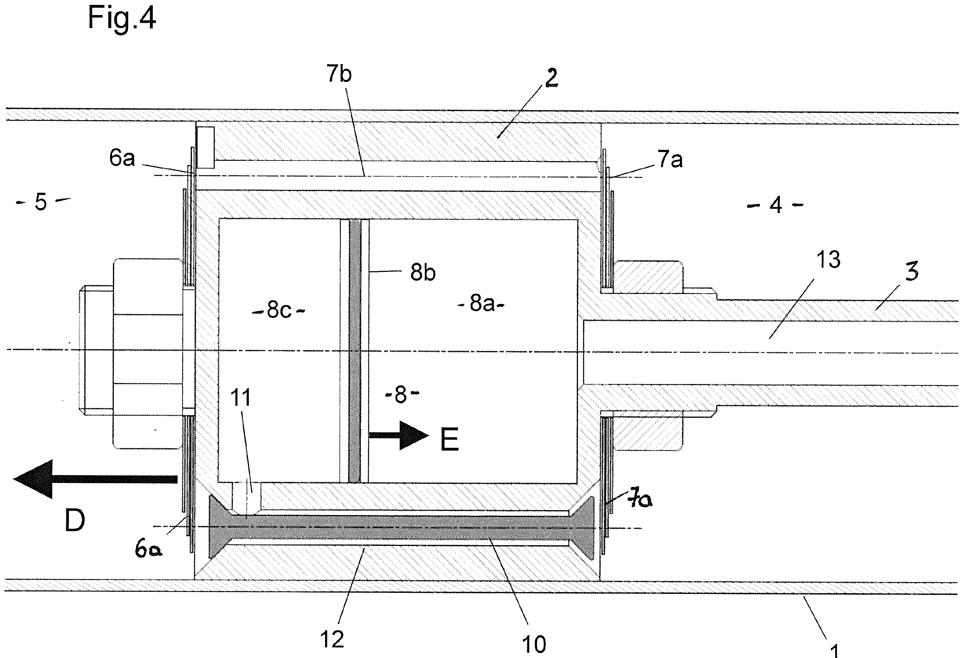

Anhand der beigefügten Prinzipskizzen wird die Erfindung weiter erläutert. Dabei zeigt Fig.1 ein erstes und Fig.2 ein zweites Ausführungsbeispiel jeweils in Form eines Einrohr-Dämpfers (einer Fahrzeug-Radaufhängung) sowie jeweils in einer Schnittdarstellung. Das Detail X aus Fig.2 ist in Fig.3 für die Zugstufe des Dämpfers (unter Verlagerung des Dämpfer-Kolbens gemäß Pfeil Z) gezeigt, während Fig.4 den wesentlichen Umfang dieses Details X für die Druckstufe des Dämpfers mit Verlagerung des Kolbens in Pfeilrichtung D wiedergibt; dabei ist jedoch in Fig.4 ein anderer sog. Dämpferkanal dargestellt als in Fig.3, worauf später noch näher eingegangen wird.

Ein grundsätzlich üblicher Zylinder einer erfindungsgemäßen und als Einrohr-Dämpfer zum Einsatz kommenden Zylinder-Kolbeneinheit trägt die Bezugsziffer 1, während ein innerhalb dieses Zylinders 1 längs dessen Achse verlagerbarer Kolben mit der Bezugsziffer 2 gekennzeichnet ist. Am Kolben 2 ist eine Kolbenstange 3 befestigt, die längs der Zylinder-Achse nach außen, d.h. in einen Bereich außerhalb des Zylinders 1, führt. Dabei durchquert die Kolbenstange 3 eine in den Figuren rechtsseitig des Kolbens 2 im Zylinder 1 liegende und in üblicher Weise mit einem Hydraulikmedium befüllte Arbeitskammer 4. Die auf der anderen Seite des Kolbens 2 (hier linksseitig desselben) im Zylinder 1 liegende Arbeitskammer trägt die Bezugsziffer 5. Im Kolben 2 sind wie üblich sog. Dämpfer-Ventile 6a, 7a vorgesehen, über die die beiden Arbeitskammern 4, 5 hydraulisch miteinander verbunden sind bzw. miteinander verbunden sein können. Korrekter ausgedrückt sind durch den Kolben 2 verlaufende Dämpferkanäle 6b, 7b vorgesehen, an oder in welchen jeweils ein geeignet ausgelegtes Dämpferventil 6a bzw. 7a vorgesehen ist, welches einen gedrosselten Durchtritt von Hydraulikmedium erlaubt, wobei mit diesem gedrosselten Überströmen von Hydraulikmedium von einer der Arbeitskammern 4 bzw. 5 in die jeweils andere Arbeitskammer 5 bzw. 4 durch die Dämpferkanäle 6b, 7b bzw. durch die Dämpfer-Ventile 6a, 7a im Zuge einer Verlagerung des Kolbens 2 innerhalb des Zylinders 1 wie üblich und bekannt diese Verlagerungsbewegung bedämpft wird.

Wie weiterhin grundsätzlich bekannt ist ein vorgespanntes, d.h. unter einem Druck p stehendes Gasvolumen 8 Bestandteil einer erfindungsgemäßen hydraulischen Zylinder-Kolbeneinheit, welches vorrangig zum Ausgleich der sich mit einer Verlagerung des Kolbens 2 im Zylinder 1 aufgrund der nur die Arbeitskammer 4 durchdringenden Kolbenstange 3 ergebenden Volumendifferenz zwischen den Arbeitskammern 4, 5 vorgesehen ist. Beim Ausführungsbeispiel nach Fig.1 ist das Gasvolumen 8, welches einen Gasraum 8a sowie einen von diesem durch eine Membran 8b getrennten Hydraulikraum 8c aufweist, außerhalb und abseits des Zylinders 1 vorgesehen und über einen Hydraulikkanal 9, 9a, 9b veränderbar mit nur einer der Arbeitskammern 4, 5 im Zylinder 1 verbunden bzw. verbindbar. Dafür ist im sich an den Hydraulikraum 8c des Gasvolumens 8 anschließenden Hydraulikkanal 9 ein Umschaltventil 10 (in den Ansprüchen nur "Ventil" genannt) vorgesehen, mittels dessen entweder der Hydraulikkanal 9a, welcher in der Arbeitskammer 4 mündet, oder der in der Arbeitskammer 5 mündende Hydraulikkanal 9b mit dem Hydraulikkanal 9 verbindbar ist. Erfindungsgemäß wird dieses Umschaltventil 10 solchermaßen geschaltet, dass das Gasvolumen 8 bzw. dessen Hydraulikraum 8c stets mit derjenigen Arbeitskammer 4 oder 5 verbunden ist oder wird, in welche aufgrund einer Verlagerung des Kolbens 2 im Zylinder 1 Hydraulikmedium aus der anderen Arbeitskammer 5 oder 4 einströmt und/oder in welcher verglichen mit der anderen Arbeitskammer (5 oder 4) der betragsmäßig geringere Hydraulikdruck herrscht.

Noch auf das Ausführungsbeispiel von Fig.1 Bezug nehmend ist hier das Umschaltventil 10 als ein hydraulisch gesteuertes 4/2-Wegeventil ausgebildet, wie die gestrichelt dargestellten Ansteuerungslinien zeigen, d.h. dieses Umschaltventil 10 wird durch die in den Arbeitskammern 4, 5 herrschenden Drücke bzw. genauer durch den Differenzdruck zwischen diesen Arbeitskammern 4, 5 in gewünschter Weise angesteuert und (selbsttätig) geschaltet und verbindet selbsttätig jeweils diejenige Arbeitskammer 4 oder 5 mit dem Gasvolumen 8, in welcher der niedrigere hydraulische Druck herrscht. Es sei allerdings ausdrücklich darauf hingewiesen, dass das Umschaltventil (10) in allgemeiner Form (und ohne zwangsweise wie figürlich dargestellt angeordnet zu sein) beispielswiese über Massenträgheit aus einer Bewegung des Einrohr-Dämpfers bzw. dessen Zylinders 1 in der Radaufhängung eines Fahrzeugs, oder auch aus der Bewegung des Kolbens 2 gegenüber dem Zylinder 1 geeignet betätigt werden kann. Ferner kann das Umschaltventil 10 auch durch den aus einer Verlagerung des Kolbens 2 im Zylinder 1 resultierenden Fluidstrom von Hydraulikmedium zwischen den beiden Arbeitskammern 4, 5 betätigt sein.

Beim nun erläuterten Ausführungsbeispiel gemäß den Figuren 2 - 4 ist das Gasvolumen 8 innerhalb des Kolbens 2 vorgesehen, der hierfür einen geeigneten Hohlraum aufweist, welcher (ähnlich Fig.1) von einem innerhalb dieses zylindrischen Hohlraumes längs dessen Zylinderachse verlagerbaren Trennkolben 8b in zwei Teilräume unterteilt ist, nämlich in einen mit unter einem Druck in der Größenordnung von 1 bar - 8 bar stehendem Gas befüllten Gasraum 8a sowie in einen Hydraulikraum 8c. Letzterer ist über einen die zylindrische Kolbenwand durchdringenden Stichkanal 11 mit einem parallel zur Achse des Zylinders 1 durch den Kolben 2 verlaufenden Verbindungskanal 12 zwischen den beiden Arbeitskammern 4, 5 verbunden. Der Stichkanal 11 bildet somit zusammen mit dem Verbindungskanal 12 einen Hydraulikkanal 9 gemäß dem Oberbegriff des unabhängigen Patentanspruchs zwischen dem Gasvolumen 8 und einer der Arbeitskammern 4, 5.

Im Verbindungskanal 12 ist nun ein (besonders deutlich in den Figuren 3 und 4 erkennbarer Ventilkörper angeordnet, welcher wie das Umschaltventil 10 des Ausführungsbeispiels nach Fig.1 wirkt und welcher daher ebenfalls mit der Bezugsziffer 10 gekennzeichnet ist. Bei diesem Ventilkörper 10 handelt es sich somit um das in den Patentansprüchen genannte "Ventil" (10). Wie ersichtlich ist der Verbindungskanal 12 endseitig nach Art eines konischen Ventilsitzes gestaltet und es ist der innerhalb des Verbindungskanals 12 liegende und dabei diesen Verbindungskanal 12 nicht vollständig versperrende Abschnitt des Ventilkörpers 10 an seinen beidseitigen Enden an die genannten Ventilsitze angepasst sich derart konisch erweiternd ausgebildet, dass dieser Ventilkörper 10 mit einem seiner Enden auf dem naheliegenden Ventilsitz aufliegen kann und dort bzw. damit den Verbindungskanal 12 absperrt. Figur 3 zeigt, dass der Ventilkörper 10 entweder auf dem in der Figur rechts liegenden Ende bzw. Ventilsitz des Verbindungskanals 12 aufliegen kann, während Figur 4 zeigt, dass der Ventilkörper 10 alternativ auf dem in der Figur links liegenden Ende bzw. Ventilsitz des Verbindungskanals 12 aufliegen kann. Weiter zeigen diese beiden Figuren 3, 4, dass beim Zustand nach Fig.3 die in der Figur links liegende Arbeitskammer 5 über den zu dieser hin offenen, d.h. durch den Ventilkörper 10 dort geöffneten Verbindungskanal 12 und den von diesem abgehenden Stichkanal 11 mit dem Hydraulikraum 8c des Gasvolumens 8 in Verbindung steht. Umgekehrt steht beim Zustand nach Figur 4 die in der Figur rechts liegende Arbeitskammer 4 über den dort zu dieser hin offenen, d.h. durch den Ventilkörper 10 dort geöffneten Verbindungskanal 12 und den von diesem abgehenden Stichkanal 11 mit dem Hydraulikraum 8c des Gasvolumens 8 in Verbindung.

Zusätzlich zum Verbindungskanal 12 sind die beiden Arbeitskammern 4, 5 des Zylinders 1 über Dämpferkanäle 6b, 7b miteinander verbunden, welche Dämpferkanäle 6b, 7b analog wie der Verbindungskanal 12 durch den Kolben 2 (parallel zur Achse des Zylinders 1) verlaufen, wobei an den Dämpferkanälen 6b, 7b noch Dämpferventile 6a, 7a vorgesehen sind. Diese Dämpferventile 6a, 7a sind in Gestalt von kreisringförmigen Ventilplättchen ausgebildet und an den beiden Stirnseiten des Kolbens 2 anliegend angebracht bzw. mittels einer Mutter gegen die Stirnseiten verschraubt, wie die Figuren 3, 4 zeigen. Für das Verständnis der Figuren 3, 4 ist wesentlich, dass in Figur 4 ein anderer Dämpferkanal als in Figur 3 dargestellt ist. Während nämlich Figur 3 den Dämpferkanal 6b zeigt, welcher in der Zugstufe des Dämpfers bei Verlagerung des Kolbens 2 gemäß Pfeil Z wirksam wird, ist in Figur 4 der Dämpferkanal 7b gezeigt, der in der Druckstufe des Dämpfers bei Verlagerung des Kolbens 2 gemäß Pfeil D wirksam wird. Der Dämpferkanal 7b ist somit der einfacheren Darstellung halber in die Zeichenebene der Figur 4 hineingedreht - tatsächlich befindet sich dort jedoch der Dämpferkanal 6b, wie Figur 3 zeigt. In der Realität befindet sich der Dämpferkanal 7b in Richtung der Achse des Zylinders 1 betrachtet bspw. um 90° gegenüber dem Dämpferkanal 6b verdreht hinter der Zeichenebene der Figuren 3, 4 auf Höhe der Zylinderachse.

Besser verständlich wird die Wirkungsweise der Dämpferkanäle 6b, 7b mit den Dämpferventilen 6a, 7a sowie des Umschaltventils 10 im Verbindungskanal 12 anhand der folgenden Erläuterung des Dämpfer-Zustands in dessen Zugstufe und in dessen Druckstufe, d.h. anhand der Erläuterung einer Verlagerung des Kolbens 2 der erdfindungsgemäßen Zylinder-Kolbeneinheit gemäß Pfeilrichtung Z (= Figur 3) und gemäß Pfeilrichtung D (= Figur 4).

In der Zugstufe gemäß Fig.3, d.h. dann wenn die Kolbenstange 3 weiter aus dem Zylinder 1 hinausfährt, bewegt sich der Kolben 2 in der Figur 3 gemäß Pfeilrichtung Z nach rechts. In der rechtsseitigen Arbeitskammer 4 erhöht sich dadurch der Hydraulikdruck, weil nur eine stark gedrosselte Menge von Hydraulikmedium durch den Dämpferkanal 6b aus der Arbeitskammer 4 in die (linksseitige) Arbeitskammer 5 überströmen kann. Zwar kann das Hydraulikmedium aus der Arbeitskammer 4 nahezu ungehindert unter Umgehung des Dämpferventils 7a in den Dämpferkanal 6b hinein gelangen, da dieser wie ersichtlich im Bereich der Ventilplättchen des Dämpferventils 7a durch eine Abstufung entsprechend erweitert ist, jedoch wird der Austritt von Hydraulikmedium aus dem Dämpferkanal 6b in die Arbeitskammer 5 durch die Ventilplättchen des Dämpferventils 6a stark behindert, was wie üblich die gewünschte Bewegungsdämpfung bewirkt.

Was nun den Ventilkörper 10 im Verbindungskanal 12 betrifft, so befinde sich dieser abweichend von der Darstellung in Figur 3 zunächst, nämlich im ersten Moment einer Kolben-Bewegung gemäß Pfeil Z als Ergebnis einer vorhergehenden entgegen gerichteten Kolbenbewegung bspw. noch in der in Fig.4 gezeigten Position. Damit kann zunächst eine gewisse Menge von Hydraulikmedium aus der rechtsseitigen Arbeitskammer 4 in den Verbindungskanal 12 gelangen, was jedoch zur Folge hat, dass dieses in den Verbindungskanal 12 gelangende Hydraulikmedium aufgrund des bereits erwähnten Druckanstiegs in der Arbeitskammer 4 am der linksseitigen Arbeitskammer 5 zugewandten Ende des Verbindungskanals 12 in die linksseitige Arbeitskammer 5, in welcher aufgrund deren VolumenVergrößerung, die wiederrum aus der Verlagerung des Kolbens gemäß Pfeil Z resultiert, kein nennenswerter Überdruck (gegenüber Umgebungsdruck) herrscht, ausströmen möchte. Dadurch wird der Ventilkörper 10 in die in Fig.3 dargestellte Position verlagert, wobei der signifikante Überdruck in der rechtsseitigen Arbeitskammer 4 diese Verlagerung (und Positionsbeibehaltung) weiter unterstützt. In dieser figürlich dargestellten Position des Ventilkörpers 10 besteht nun wie ersichtlich eine direkte hydraulische Verbindung zwischen der Arbeitskammer 5 - diese ist aufgrund der Bewegungsrichtung des Kolbens 2 naturgemäß diejenige mit dem niedrigeren Druck - über den nur zu dieser Arbeitskammer 5 hin offenen Verbindungskanal 12 und den davon abgehenden Stichkanal 11 zum Hydraulikraum 8c des Gasvolumens 8, so dass dieses - wie gewünscht - mit der Arbeitskammer 5 derart verbunden ist, dass das (über dessen Gasraum 8a) vorgespannte Gasvolumen 8 auf das in der Arbeitskammer 5 befindliche Hydraulikmedium pressend einwirkt.

Im Weiteren werden nun die Verhältnisse in der Druckstufe des Dämpfers bzw. der erfindungsgemäßen Zylinder-Kolbeneinheit beschrieben:
In der Druckstufe gemäß Fig.4, d.h. dann wenn die Kolbenstange 3 weiter in den Zylinder 1 hineinfährt, bewegt sich der Kolben 2 in der Figur 4 gemäß Pfeilrichtung D nach links. In der linksseitigen Arbeitskammer 5 erhöht sich dadurch der Hydraulikdruck, weil nur eine stark gedrosselte Menge von Hydraulikmedium durch den Dämpferkanal 7b aus der Arbeitskammer 5 in die (rechtsseitige) Arbeitskammer 4 überströmen kann. Zwar kann das Hydraulikmedium aus der Arbeitskammer 5 nahezu ungehindert unter Umgehung des Dämpferventils 6a in den Dämpferkanal 7b hineingelangen, da dieser wie ersichtlich im Bereich der Ventilplättchen des Dämpferventils 6a durch eine Abstufung entsprechend erweitert ist, jedoch wird der Austritt von Hydraulikmedium aus dem Dämpferkanal 7b in die Arbeitskammer 4 durch die Ventilplättchen des Dämpferventils 7a stark behindert, was wie üblich die gewünschte Bewegungsdämpfung bewirkt.

Was nun den Ventilkörper 10 im Verbindungskanal 12 betrifft, so befinde sich dieser abweichend von der Darstellung in Figur 4 zunächst, nämlich im ersten Moment einer Kolben-Bewegung gemäß Pfeil D als Ergebnis einer vorhergehenden entgegen gerichteten Kolbenbewegung bspw. noch in der in Fig.3 gezeigten Position. Damit kann zunächst eine gewisse Menge von Hydraulikmedium aus der linksseitigen Arbeitskammer 5 in den Verbindungskanal 12 gelangen, was jedoch zur Folge hat, dass dieses in den Verbindungskanal 12 gelangende Hydraulikmedium aufgrund des bereits erwähnten Druckanstiegs in der Arbeitskammer 5 am der rechtsseitigen Arbeitskammer 4 zugewandten Ende des Verbindungskanals 12 in die rechtsseitige Arbeitskammer 4, in welcher aufgrund deren VolumenVergrößerung, die wiederrum aus der Verlagerung des Kolbens gemäß Pfeil D resultiert, kein nennenswerter Überdruck (gegenüber Umgebungsdruck) herrscht, ausströmen möchte. Dadurch wird der Ventilkörper 10 in die in Fig.4 dargestellte Position verlagert, wobei der signifikante Überdruck in der linksseitigen Arbeitskammer 5 diese Verlagerung (und Positionsbeibehaltung) weiter unterstützt. In dieser figürlich dargestellten Position des Ventilkörpers 10 besteht nun wie ersichtlich eine direkte hydraulische Verbindung zwischen der Arbeitskammer 4 - diese ist aufgrund der Bewegungsrichtung des Kolbens 2 naturgemäß diejenige mit dem niedrigeren Druck - über den nur zu dieser Arbeitskammer 4 hin offenen Verbindungskanal 12 und den davon abgehenden Stichkanal 11 zum Hydraulikraum 8c des Gasvolumens 8, so dass dieses - wie gewünscht - mit der Arbeitskammer 4 derart verbunden ist, dass das (über dessen Gasraum 8a) vorgespannte Gasvolumen 8 auf das in der Arbeitskammer 4 befindliche Hydraulikmedium pressend einwirkt.

Insbesondere jedoch gilt es im Rahmen dieser Druckstufe bzw. dieser Bewegung des Kolbens 2 gemäß Pfeilrichtung D, die zusätzliche und durch den in die Arbeitskammer 4 hineinfahrenden Abschnitt der Kolbenstange 3, welcher vor einer solchen Kolbenbewegung außerhalb des Zylinders 1 lag, verdrängte Menge von Hydraulikmedium in ein geeignetes Reservoir abzuführen, da die linksseitige Arbeitskammer 5 diese zusätzliche Menge von verdrängtem Hydraulikmedium naturgemäß nicht aufnehmen kann. Diese von der Kolbenstange 3 bei Verlagerung des Kolbens 2 gemäß Pfeil D verdrängte Menge von Hydraulikmedium gelangt nun durch den zur Arbeitskammer 4 hin offenen Ventilkörper 10 (bzw. das "Umschaltventil 10") in den Verbindungskanal 12 und von diesem aus durch den Stichkanal 11 in den Hydraulikraum 8c des Gasvolumens 8. Als Folge dessen wird dessen Trennkolben 8b gemäß Pfeil E um ein gewisses Maß nach rechts verlagert, wobei das im Gasraum 8a befindliche Gas weiter komprimiert wird. Bei einer darauf folgenden und dem Pfeil D entgegen gerichteten Verlagerung des Kolbens 2 im Rahmen der genannten Zugstufe gemäß Pfeil Z und Fig.3 hingegen wird für die Befüllung der Arbeitskammer 5 eine geringe Menge mehr von Hydraulikmedium benötigt als aus der Arbeitskammer 4 abgeführt wird, da gleichzeitig das in dieser befindliche Volumen der Kolbenstange 3 abnimmt, so dass dann eine entsprechende Menge von Hydraulikmedium aus dem Hydraulikraum 8c des Gasvolumens 8 entnommen wird und über den Stichkanal 11 und den gemäß Fig.3 zur Arbeitskammer 5 hin offenen Verbindungskanal 12 der Arbeitskammer 5 (wieder) zugeführt wird. Dabei wird innerhalb des Gasvolumens 8 dessen Trennkolben 8b um ein gewisses Maß gemäß Pfeil Y verlagert.

Zurückkommend auf Fig.2 erkennt man einen in der Kolbenstange 3 verlaufenden und mit dem Gasraum 8a des Gasvolumens 8 verbundenen Kanal 13, der bis an das freie Ende der Kolbenstange 3 führt und dort verschlossen, aber auch geöffnet werden kann, um den Gasraum 8a erstmalig (oder im Rahmen von Wartungsarbeiten) mit einem Gas unter benötigtem Druck zu befüllen. Vorteilhafterweise vergrößert der Kanal 13 das Volumen des Gasraumes 8a, wodurch bei gleicher hydraulischer Volumenänderung eine kleinerer Druckanstieg im Gasvolumen 8 erfolgt.

Nochmals erwähnt sei, dass das Gasvolumen 8 beim zweiten Ausführungsbeispiel zwar als Kolben-Zylindereinheit ausgeführt ist aber aufgrund des geringen Gasdrucks alternativ auch der Einsatz einer Membran oder eines Falten- oder Rollbalgs oder überhaupt ein Verzicht auf eine Trennung von Hydraulikmedium und Gas möglich ist. Ferner kann die vorliegende Erfindung ausdrücklich anderweitig als in Dämpfern in der Radaufhängung von Fahrzeugen zur Anwendung kommen, so bspw. bei Gasdruckfedern oder anderen (Dämpfungs-)Elementen, welche ein vorgespanntes Volumen durch Gasdruck, Federkraft oder Gewichtskraft etc. aufweisen.

## Patentansprüche

1. Hydraulischer Einrohr-Teleskop-Schwingungsdämpfer mit einem vorgespannten und über einen Hydraulikkanal (9, 11, 12) auf eine von beidseitig des in einem Zylinder (1) verlagerbar geführten Kolbens (2) liegenden und mit einem Hydraulikmedium befüllten Arbeitskammern (4, 5) pressend einwirkenden Gasvolumen (8), welches vorrangig zum Ausgleich der sich mit einer Verlagerung des Kolbens (2) im Zylinder (1) aufgrund einer nur eine der Arbeitskammern (4, 5) durchdringenden Kolbenstange (3) ergebenden Volumendifferenz zwischen den Arbeitskammern (4, 5) vorgesehen ist, wobei das Gasvolumen (8) in Abhängigkeit von der Bewegungsrichtung (D, Z) des Kolbens (2) mit Hilfe eines Ventils (10) mit derjenigen Arbeitskammer (4, 5) verbunden wird oder verbunden ist, in welche Hydraulikmedium aufgrund der Kolbenbewegung aus der anderen Arbeitskammer (5, 4) durch ein in zumindest einem Dämpferkanal (6b, 7b) vorgesehenes Dämpferventil (6a, 7a) einströmt und/oder in welcher verglichen mit der anderen Arbeitskammer (5, 4) der geringere Hydraulikdruck herrscht,
**dadurch gekennzeichnet**, das genannte Ventil (10) in Form eines einzigen und in dem nur mit beiden Arbeitskammern (4, 5), aber nicht mit einem Dämpferkanal (6b, 7b) in Verbindung stehenden Hydraulikkanal (9, 11, 12) vorgesehenen Umschaltventiles (10) ausgebildet ist, welches gesteuert durch die Druckdifferenz in den Arbeitskammern (4, 5) in seinen beiden möglichen Schaltpositionen ausschließlich diejenige Arbeitskammer (4, 5), in welcher der betragsmäßig geringere Hydraulikdruck herrscht, mit dem einzigen vorgesehenen Gasvolumen (8) verbindet.

2. Schwingungsdämpfer nach Anspruch 1, wobei das Gasvolumen (8) außerhalb oder abseits des Zylinders (1) vorgesehen ist.

3. Schwingungsdämpfer nach Anspruch 1, wobei das Gasvolumen (8) innerhalb des Kolbens (1) vorgesehen ist.

4. Schwingungsdämpfer nach Anspruch 3, wobei das Ventil (10) im Kolben (2) vorgesehen ist

5. Schwingungsdämpfer nach Anspruch 4, wobei das Ventil (10) in einem Verbindungskanal (12) zwischen den beiden Arbeitskammern (4, 5) angeordnet ist, von welchem ein Stichkanal (11) zum Gasvolumen (8) abzweigt und wobei das Ventil (10) ausgelöst durch den Hydraulikdruck in den Arbeitskammern (4, 5) und/oder durch ein gegebenenfalls durch ein Dämpferventil (6a, 7a) gedämpftes Überströmen von Hydraulikmedium zwischen den Arbeitskammern (4, 5) nur eine der beiden Arbeitskammern (4, 5) mit dem zum Stichkanal (11) führenden Abschnitt des Verbindungskanals (12) verbindet.

6. Schwingungsdämpfer nach einem der Ansprüche 3 - 5, wobei das Gasvolumen (8) mittels eines in der Kolbenstange (3) verlaufenden Kanals (13) mit der Umgebung verbindbar ist.

7. Schwingungsdämpfer nach einem der Ansprüche 3 - 6, wobei das Gasvolumen (8) zwei voneinander getrennte Räume (8a, 8c) aufweist, nämlich einen Gasraum (8a), welcher nur eine unter Vordruck stehende Gasfüllung enthält, und einen Hydraulikraum (8c), auf welchen der Gasraum (8a) mit seinem Vordruck pressend einwirkt.

8. Schwingungsdämpfer nach Anspruch 7, wobei eine Trennung zwischen den beiden Räumen (8a, 8c) durch einen Trennkolben (b) oder eine Membran oder einen elastischen Balg gebildet ist.

## Claims

1. An hydraulic single-tube telescopic vibration damper comprising a prestressed gas volume (8) that presses on one of two working chambers (4, 5), which are filled with a hydraulic medium and lie on either side of a piston (2) that is guided displaceably in a cylinder (1), via a hydraulic channel (9, 11, 12) and that is provided primarily in order to equalise the volume difference between the working chambers (4, 5) resulting from a displacement of the piston (2) in the cylinder (1) on account of a piston rod (3) penetrating just one of the working chambers (4, 5), wherein, depending on the direction of movement (D, Z) of the piston (2), the gas volume (8) is connected with the aid of a valve (10) to the working chamber (4, 5) into which, on account of the piston movement, hydraulic medium flows from the other working chamber (5, 4) through a damper valve (6a, 7a) provided in at least one damper channel (6b, 7b) and/or in which the lower hydraulic pressure compared to the other working chamber (5, 4) prevails,
**characterised in that** the aforesaid valve (10) is designed in the form of a single switchover valve (10) that is provided in the hydraulic channel (9, 11, 12), which is connected only to the two working chambers (4, 5) and not to a damper channel (6b, 7b), which switchover valve, in both of its possible switch positions, connects exclusively the working chamber (4, 5) in which the lower hydraulic pressure value prevails to the single provided gas volume (8) in a controlled manner on the basis of the pressure difference in the working chambers (4, 5).

2. A vibration damper according to claim 1, wherein the gas volume (8) is provided outside or at a distance from the cylinder (1).

3. A vibration damper according to claim 1, wherein the gas volume (8) is provided inside the piston (1).

4. A vibration damper according to claim 3, wherein the valve (10) is provided in the piston (2).

5. A vibration damper according to claim 4, wherein the valve (10) is arranged in a connection channel (12) between the two working chambers (4, 5), from which a branch channel (11) to the gas volume (8) branches, and wherein the valve (10), triggered by the hydraulic pressure in the working chambers (4, 5) and/or by a flowing over of hydraulic medium between the working chambers (4, 5), damped by a damper valve (6a, 7a) if appropriate, connects just one of the two working chambers (4, 5) to the portion of the connection channel (12) leading to the branch channel (11).

6. A vibration damper according to any one of claims 3-5, wherein the gas volume (8) is connectable to the surrounding environment by means of a channel (13) running in the piston rod (3).

7. A vibration damper according to any one of claims 3-6, wherein the gas volume (8) has two chambers (8a, 8c) separated from one another, specifically a gas chamber (8a) which contains only a gas filling under primary pressure, and a hydraulic chamber (8c) onto which the gas chamber (8a) presses with its primary pressure.

8. A vibration damper according to claim 7, wherein a separation between the two chambers (8a, 8c) is formed by a separating piston (b) or a membrane or a resilient bellows.

## Revendications

1. Amortisseur de vibrations télescopique monotubulaire hydraulique comprenant un volume de gaz (8) précontraint et agissant par compression par l'intermédiaire d'un canal hydraulique (9, 11, 12) sur l'une des chambres de travail (4, 5) remplies d'un fluide hydraulique, situées de part et d'autre d'un piston (2) pouvant se déplacer dans un cylindre (1), et qui est en priorité prévu pour permettre d'équilibrer la différence de volume entre les deux chambres de travail (4, 5) résultant d'un déplacement du piston (2) dans le cylindre (1) du fait de la présence d'une tige de piston (3) ne pénétrant que dans l'une des chambres de travail (4, 5), le volume de gaz (8) devenant ou étant relié en fonction du sens de déplacement (D, Z) du piston (2) à l'aide d'une soupape (10) avec la chambre de travail (4, 5) dans laquelle pénètre en raison du déplacement du piston du fluide hydraulique provenant de l'autre chambre de travail (5, 4) par l'intermédiaire d'une soupape d'amortissement (6a, 7a) prévue dans au moins un canal d'amortissement (6b, 7b), et/ou dans laquelle règne la pression hydraulique la plus faible en comparaison avec l'autre chambre de travail (5, 4),
**caractérisé en ce que**
la soupape (10) est réalisée sous la forme d'une soupape de commutation (10) unique qui est prévue dans le canal hydraulique (9, 11, 12) en liaison uniquement avec les deux chambres de travail (4, 5) mais pas avec un canal d'amortissement (6b, 7b), qui relie au volume de gaz unique (8) en étant commandée par la différence de pression dans les chambres de travail (4, 5), dans ses deux positions de commutation possibles uniquement avec la chambre de travail (4, 5) dans laquelle règne la pression hydraulique, la plus faible.

2. Amortisseur de vibrations conforme à la revendication 1,
dans lequel le volume de gaz (8) est situé à l'extérieur ou à l'écart du cylindre (1).

3. Amortisseur de vibrations conforme à la revendication 1,
dans lequel le volume de gaz (8) est situé à la partie interne du piston (1).

4. Amortisseur de vibrations conforme à la revendication 3,
dans lequel la soupape (10) est située dans le piston (2).

5. Amortisseur de vibrations conforme à la revendication 4,
dans lequel la soupape (10) est montée dans un canal de liaison (12) entre les deux chambres de travail (4, 5) duquel dérive un canal de piquage (11) vers le volume de gaz (8), et la soupape (10) ne relie, en étant déclenchée par la pression hydraulique dans les chambres de travail (4, 5) et/ou par un débordement de fluide hydraulique le cas échéant amorti au travers d'une soupape d'amortissement (6a, 7a) entre les chambres de travail (4, 5), que l'une des deux chambres de travail (4, 5) avec le segment du canal de liaison (12) conduisant au canal de piquage (11).

6. Amortisseur de vibrations conforme à l'une des revendications 3 à 5,
dans lequel le volume de gaz (8) peut être relié à l'environnement au moyen d'un canal (13) s'étendant dans la tige de piston (3).

7. Amortisseur de vibrations conforme à l'une des revendications 3 à 6,
dans lequel le volume de gaz (8) comporte deux volumes (8a, 8c) séparés l'un de l'autre, à savoir un volume de gaz (8a) qui ne renferme que du gaz se trouvant à une pression préalable et un volume hydraulique (8c) sur lequel agit le volume de gaz (8a) par sa pression préalable.

8. Amortisseur de vibrations conforme à la revendication 7,
dans lequel la séparation entre les deux volumes (8a, 8c) est formée par un piston de séparation (b) ou par membrane ou par un soufflet élastique.
